# EUROPÄISCHE PATENTSCHRIFT

(11) **EP 1 595 641 B1**
(45) Veröffentlichungstag und Bekanntmachung des Hinweises auf die Patenterteilung: **27.02.2008**
(21) Anmeldenummer: 05405228.7
(22) Anmeldetag: 08.03.2005
(51) Int. Cl.: B23Q 7/14, B23Q 16/08, B23Q 16/00, B23H 7/26, B23Q 1/00

(54) **Spanneinrichtung mit einem Spannfutter und einer lösbar daran fixierbaren Palette**
Clamping assembly having a chuck and a pallet releasably mounted thereon
Dispositif de serrage avec mandrin et palette fixé de façon amovible sur le mandrin.

(30) Priorität: 22.04.2004 CH 7012004
(43) Veröffentlichungstag der Anmeldung: 16.11.2005
(73) Patentinhaber: Erowa AG, CH-5734 Reinach (CH)
(72) Erfinder: Nie, Peter, 5737 Menziken (CH)
(74) Vertreter: Rottmann, Maximilian

(56) Entgegenhaltungen:
- EP-A- 0 255 042
- GB-A- 2 113 578
- US-A1- 2003 227 120

## Beschreibung

Die vorliegende Erfindung bezieht sich auf eine gemäss dem Oberbegriff des Anspruchs 1 ausgebildete Spanneinrichtung.

Spanneinrichtungen der hier zur Rede stehenden Art dienen dem positionsdefinierten Aufspannen von Werkstücken im Arbeitsbereich einer Bearbeitungsmaschine. Das Werkstück wird dabei zuerst auf eine Palette festgespannt, welch letztere lösbar am Spannfutter fixierbar ist. Das Spannfutter selber ist üblicherweise fest mit der Arbeitsmaschine verbunden.

Bei bekannten Spanneinrichtungen ist das Spannfutter üblicherweise mit vier Zentrierzapfen versehen, welche je zwei konisch verlaufende Seitenflächen aufweisen. Die Palette ist mit vier Nuten versehen, welche in der Lage und Form mit den Zentrierzapfen korrespondieren. Die Palette ist mit einem mittig angeordneten Spannzapfen versehen, mittels welchem sie am Spannfutter fixierbar ist. Beim Festspannen der Palette am Spannfutter dringen die Zentrierzapfen in die Nuten ein und richten die Palette gegenüber dem Spannfutter in X- und Y-Richtung sowie bezüglich der Winkellage um die Z-Achse aus.

Aus der EP 0 255 042 ist eine gattungsgemässe Spannvorrichtung zum Fixieren eines Werkzeugs an einer Werkzeugmaschine bekannt. Die Spannvorrichtung besteht im wesentlichen aus einem Spannfutter, einem Elektrodenhalter sowie einem in letzterem verankerbaren Zugbolzen. In die Oberseite des Elektrodenhalters sind vier Nuten eingelassen, welche um jeweils 90° um die Z-Achse zueinander versetzt sind. In jede Flanke jeder Nut ist ein Einschnitt zur Bildung einer in Z-Richtung elastisch nachgiebigen Lippe eingeschnitten. Von der Oberseite des Spannfutters stehen vier Leisten vor, welche in Lage und Form mit den Nuten des Elektrodenhalters korrespondieren. In den Ecken des Spannfutters sind vier als Z-Referenz dienende Pfosten angeordnet. Beim Festspannen des Elektrodenhalters am Spannfutter legen sich die Leisten des Werkzeughalters an den elastisch nachgiebigen Lippen an und biegen diese in Z-Richtung axial einwärts, bis die als Z-Referenz dienenden Pfosten an Stützflächen des Spannfutters zur Anlage kommen, so dass die Z-Lage des Elektrodenhalters gegenüber dem Spannfutter bestimmt ist. Durch die sich an den Lippen anlegenden Leisten wird der Elektrodenhalter gegenüber dem Spannfutter beim Festspannen in X- und Y-Richtung sowie bezüglich der Winkellage um die Z-Achse positioniert. Um den Elektrodenhalter vom Spannfutter abnehmen zu können, muss dieser um zumindest die Länge des über den Elektrodenhalter vorstehenden Zugbolzens abgehoben werden. Das heisst mit anderen Worten, dass in Z-Richtung über dem am Spannfutter festgespannten Elektrodenhalter ein Freiraum frei bleiben muss, der zumindest annähernd der Länge Zugbolzens entspricht, damit der Elektrodenhalter von dem Spannfutter abgehoben und entfernt werden kann.

Die Aufgabe der Erfindung besteht nun darin, eine gemäss dem Oberbegriff des Patentanspruchs 1 ausgebildete Spanneinrichtung zu schaffen, welche zum einen eine geringe Bauhöhe besitzt und bei welcher zum Abnehmen der Palette ein vergleichsweise geringer Freiraum in Z-Richtung genügt.

Diese Aufgabe wird mit einer Spanneinrichtung gelöst, welche mit den im Kennzeichen des Anspruchs 1 angeführten Merkmalen versehen ist.

Der grundlegende Erfindungsgedanke ist darin zu sehen, dass kein separater bzw. keine separaten Zugbolzen zum Fixieren der Palette an dem Spannfutter vorgesehen ist/sind, sondern dass die an der Palette angeordneten Zentrierzapfen sowohl dem Zentrieren wie auch dem Fixieren der Palette am Spannfutter dienen. Dazu ist bei der jeweiligen, am Spannfutter vorgesehenen Zentriernut jeweils die eine Nutflanke zur Zentrierung des jeweiligen Zentrierzapfens ausgebildet, während die jeweils andere Nutflanke durch ein Spannelement gebildet wird, welches an einer Ausnehmung und/oder Erhebung des jeweiligen Zentrierzapfens anzugreifen bestimmt ist, um den Zentrierzapfen sowohl in Z-Richtung in die Zentriernut hineinzuziehen wie auch gegen die andere, zur Zentrierung vorgesehene Nutflanke zu drücken.

Bevorzugte Ausführungsformen und Weiterbildungen des Erfindungsgegenstandes sind in den abhängigen Ansprüchen 2-11 umschrieben.

Im folgenden wird ein Ausführungsbeispiel der erfindungsgemässen Spanneinrichtung unter Bezugnahme auf die beiliegenden Zeichnungen näher erläutert. In den Zeichnungen zeigt:
- Fig. 1: eine perspektivische Ansicht des Spannfutters sowie der Palette;
- Fig. 2: eine Draufsicht auf das Spannfutter;
- Fig. 3: einen Querschnitt durch die Palette und das Spannfutter;
- Fig. 4: einen Querschnitt durch die Palette und das Spannfutter im zusammengefügten, nicht gespannten Zustand, und
- Fig. 5: einen Querschnitt durch das Spannfutter und die daran festgespannte Palette.

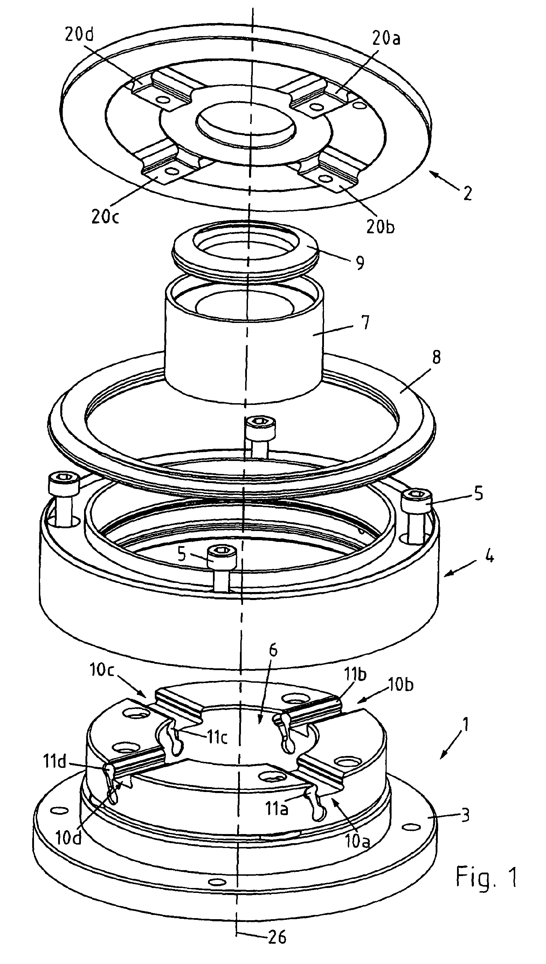

Die Fig. 1 zeigt die Palette 2 sowie das Spannfutter 1 mitsamt einigen Einzelteilen in einer perspektivischen Ansicht. Das im wesentlichen zylindrisch ausgebildete Spannfutter 1 besitzt eine runde Bodenplatte 3, an der ein das eigentliche Spannfutter 1 umgebendes Ringelement 4 mittels mehrerer Schrauben 5 befestigt wird. Das Spannelement 1 ist mit einer zentralen, durchgehenden Öffnung 6 versehen, in welche eine Buchse 7 eingesetzt wird. Sowohl in das Ringelement 4 wie auch in die Buchse 7 wird je eine ringförmige Dichtung 8, 9 von oben eingesetzt. Das Spannfutter 1 ist mit vier Zentriernuten 10a, 10b, 10c, 10d versehen, welche jeweils 90° um die Z-Achse 26 zueinander versetzt angeordnet sind. Die Palette 2 ihrerseits ist mir vier korrespondierend zu den Zentriernuten ausgebildeten Zentrierzapfen 20a, 20b, 20c, 20d versehen.

Bei den in das Spannfutter 1 eingelassenen Zentriernuten 10a, 10b, 10c, 10d ist jeweils die eine Nutflanke zur Zentrierung des jeweiligen Zentrierzapfens ausgebildet ist, während die jeweils andere Nutflanke durch ein Spannelement in Form eines schwenkbar gelagerten Riegels 11a, 11 b, 11 c, 11 d gebildet wird. Die insgesamt vier Riegel 11a, 11 b, 11c, 11d dienen dem Festspannen der Palette 2 am Spannfutter 1, wie nachfolgend noch näher erläutert wird. Der jeweilige Riegel 11a, 11 b, 11 c, 11 d wird von der Seite her in eine dafür vorgesehene Nut eingeschoben. Im zusammengebauten Zustand der Spanneinrichtung wird der jeweilige Riegel 11a, 11b, 11c, 11d auf der Innenseite durch die Buchse 7 und auf der Aussenseite durch das Ringelement 4 in seiner axialen Richtung fixiert.

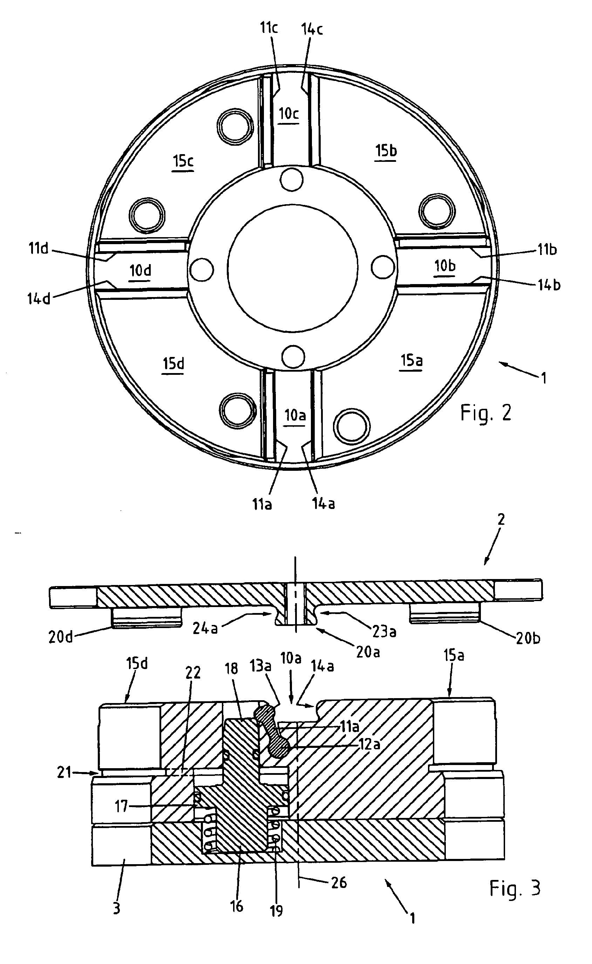

In der Fig. 2 ist das Spannfutter 1 in einer Draufsicht dargestellt. Nebst den vier Zentriernuten 10a, 10b, 10c, 10d und den vier Riegeln 11a, 11 b, 11 c, 11 d sind aus dieser Darstellung die vier der Zentrierung des jeweiligen Zentrierzapfens dienenden Nutflanken 14a, 14b, 14c, 14d ersichtlich. Von den beiden einander in Zeichnungslängsrichtung gegenüberliegenden Zentrieröffnungen 10a, 10c bildet jeweils die rechte Nutflanke 14a, 14c einen Anschlag zur Festlegung der Lage der Palette in X-Richtung, während von den beiden anderen, einander in Zeichnungsquerrichtung diametral gegenüberliegenden Nuten 10b, 10d jeweils die dem unteren Zeichnungsrand zugewandte Nutflanke 14b, 14d einen Anschlag zur Festlegung der Lage der Palette in Y-Richtung bilden. Die jeweils zwischen zwei einander benachbarten Zentriernuten 10a, 10b; 10b, 10c; 10c, 10d; 10d, 10a verbleibende Fläche 15a, 15b, 15c, 15d bildet einen Anschlag zur Festlegung der Palette in Z-Richtung. Diese die Z-Referenz definierenden Auflageflächen 15a, 15b, 15c, 15d sind kreisringsegmentförmig gestaltet.

Die Fig. 3 zeigt die Palette 2 und das Spannfutter 1 in einem durch die Zentriernut 10a der Palette 2 bzw. den Zentrierzapfen 20a des Spannfutters 1 verlaufenden Querschnitt, wobei die runde Bodenplatte 3 im Durchmesser verkleinert dargestellt ist. Der jeweilige Riegel 11 a ist auf seiner Unterseite mit einem zylindrischen Ansatz 12a versehen, der in einer entsprechenden Nut des Spannfutters 1 aufgenommen ist. Dieser zylindrischen Ansatz 12a bildet gleichzeitig die Lagerstelle, um welche der Riegel 11a verschwenkbar ist. Zum Betätigen des Riegels 11a ist ein Spannkolben 16 vorgesehen, der mittels einer an der Bodenplatte 3 abgestützten Feder 19 in Richtung des Riegels 11a belastet ist. Der Spannkolben 16 ist mit einem ringförmigen Bund 17 sowie einem zylindrischen Fortsatz 18 versehen, der einen konisch zulaufenden Vorderteil aufweist, mittels welchem der Riegel 11a radial verschiebbar bzw. um seine Lagerstelle verschwenkbar ist. Der Fortsatz 18 ist auf der dem Riegel 11a zugewandten Seite vorzugsweise etwas abgeflacht, um die Auflagefläche zwischen dem Fortsatz 18 und dem Oberteil 13a des Riegels 11a zu vergrössern und die partielle Flächenbelastung zu verringern. Um den Kolben 16 entgegen der Kraft der Feder 19 in den hier dargestellten Ausgangszustand zu Verschieben, wird Druckluft auf die Oberseite des Bundes 17 geleitet. Diese Druckluft wird über eine ringförmige Nut 21 und einen Kanal 22 zugeführt. Bei zusammengesetztem Spannfutter bildet die Nut 21 durch das sie umgebende Ringelement 4 (Fig. 1) einen Ringkanal, der mittels nicht dargestellten Dichtungen abgedichtet ist.

Der jeweilige Zentrierzapfen 20a ist beidseitig mit je einer Ausnehmung 23a, 24a versehen. Die zur Zentrierung des jeweiligen Zentrierzapfens 20a vorgesehene, rechte Nutflanke 14a ist als Erhebung ausgebildet, welche sich beim Festspannen der Palette 2 an der einen, rechten Ausnehmung 23a des Zentrierzapfens 20a anlegt. Der Riegel 11 a seinerseits ist ebenfalls mit einer Erhebung 13a versehen, die sich beim Festspannen der Palette 2 an der anderen, linken Ausnehmung 24a des Zentrierzapfens 20a anlegt.

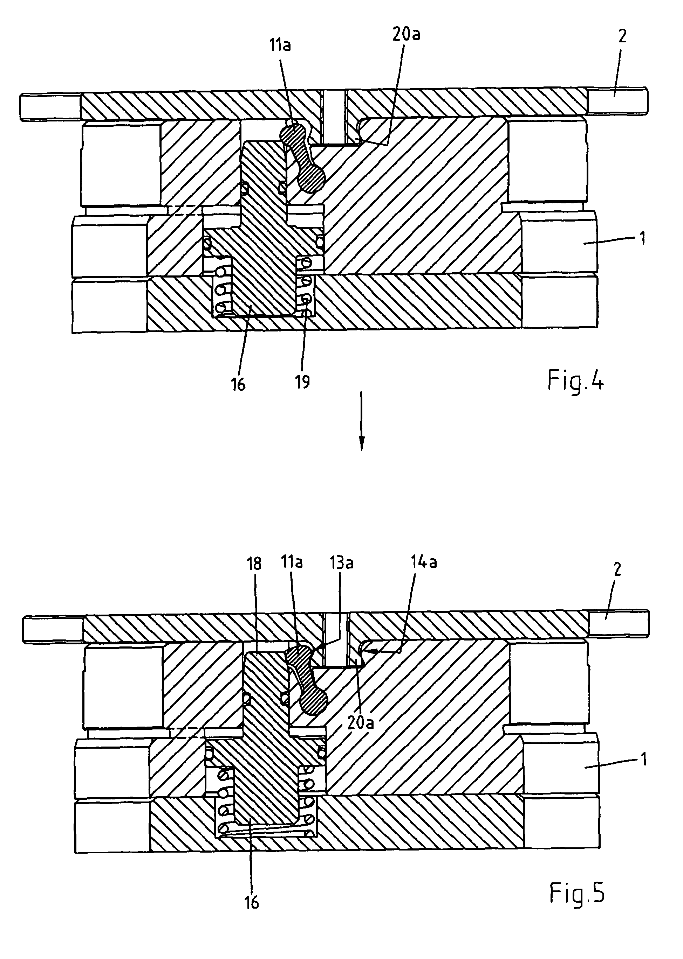

Die Fig. 4 zeigt einen Querschnitt durch die Palette 2 und das Spannfutter 1 im zusammengefügten, nicht gespannten Zustand. Damit der jeweilige Zentrierzapfen 20a der Palette 2 in die entsprechende Zentriernut des Spannfutters 1 eingeführt werden kann, muss der Kolben 16 pneumatisch in die dargestellte Ausgangstellung nach unten verschoben werden. Der Riegel 11a befindet sich dabei in der nach links verschwenkten Grundstellung. Um sicherzustellen, dass der Riegel 11a die Grundstellung einnimmt, wenn sich der Spannkolben 16 in der Ausgangsstellung befindet, kann ggf. ein Federelement vorgesehen werden. Andererseits ist der Riegel 11a derart ausgebildet, dass er vom jeweiligen, in die Zentriernut eindringenden Zentrierzapfen 20a in die Ausgangsstellung, d.h. nach links gedrückt wird, sofern er sich in der Wirkstellung befinden sollte.

Nachdem die Palette 2 auf den Z-Auflagen des Spannfutters 1 aufliegt und die Zentrierzapfen in der entsprechenden Nut aufgenommen sind, wird die pneumatische Druckbeaufschlagung des Spannkolbens 16 reduziert, wodurch sich dieser unter der Einwirkung der Kraft der jeweiligen Feder 19 nach oben in die in der Fig. 5 gezeigte Wirkstellung verschiebt. Beim Hochfahren des Spannkolbens 16 drückt der zylindrische Fortsatz 18 den Riegel 11a in Richtung der gegenüberliegenden Nutflanke 14a. Durch die Gestaltung der Nutflanke 14a sowie die Erhebung 13a des Riegels 11a wird der Zentrierzapfen 20a in Z-Richtung in die jeweilige Nut hineingezogen, wodurch einerseits eine Zentrierung in Z-Richtung stattfindet. Gleichzeitig findet auch eine Zentrierung der Palette 2 in X- und in Y-Richtung sowie in Drehrichtung um die Z-Achse statt. Durch das Hochfahren des Spannkolbens 16 wird der Riegel 11a, je nach Auslegung, um einige Zehntelmillimeter bis einige Millimeter nach rechts in die Wirkstellung verschwenkt, in welcher die Palette 2 am Spannfutter 1 festgespannt ist und auf den Z-Auflageflächen 15a, 15b, 15c, 15d (Fig. 2) aufliegt, so dass neben der Z-Positionierung letztendlich auch die Drehrichtung der Palette 2 um die X- und Y-Achse festgelegt ist. Der Zentrierzapfen 20a ist derart dimensioniert, dass er nicht am Boden der Zentriernut aufliegt.

Anstelle von vier separaten Spannkolben zum Betätigen der vier Riegel, kann beispielsweise auch ein ringförmiger Kolben vorgesehen werden, der mit vier zylindrischen Fortsätzen zum Betätigen der vier Riegel versehen ist. Andererseits kann der jeweilige Zentrierzapfen, anstelle oder zusätzlich zur Ausnehmung, mit einer Erhebung versehen sein, an welcher ein korrespondierend ausgebildetes Spannelement angreift.

Die Vorteile einer derart ausgebildeten Spanneinrichtung lassen sich wie folgt zusammenfassen:
- Sehr kompakter Aufbau, insbesondere sehr geringe Bauhöhe, da keine Spannzapfen vorhanden sind;
- Zum Abheben der Palette genügt ein Freiraum von ca. 10 mm oberhalb der Spanneinrichtung.
- Einfacher Aufbau, es müssen keine federelastisch nachgiebigen Zentrierelemente vorgesehen werden;
- Hohe absolute- wie auch hohe Repetiergenauigkeit;
- Durch das Wegfallen des Spannzapfens kann das Spannfutter mit einer zentralen, durchgehenden Öffnung versehen werden;
- Durch die beiden ringförmigen Dichtungen wird ein gute Abdichtung der dazwischen angeordneten, für die Zentrierung relevanten Elemente gewährleistet;
- Die für die Betätigung der Riegel vorgesehenen Spannkolben sind nach aussen pneumatisch abgedichtet;
- Es muss keine Luft ausgeblasen werden, um die Zentrier- und/oder die Auflageflächen pneumatisch zu reinigen;
- In Z-Richtung sind keine hohen Einzugskräfte notwendig, daher kann die Palette sehr flach gehalten werden.

## Patentansprüche

1. Spanneinrichtung mit einem Spannfutter (1) und einer lösbar daran fixierbaren Palette (2), wobei das Spannfutter (1) mit zumindest drei Zentriernuten (10a, 10b, 10c, 10d) und die Palette (2) mit zumindest drei korrespondierenden Zentrierzapfen (20a, 20b, 20c, 20d) versehen ist, und wobei das Spannfutter (1) mit Spannmitteln zum Festspannen der Palette (2) versehen ist, **dadurch gekennzeichnet, dass** jeweils die eine Flanke (14a, 14b, 14c, 14d) der Zentriernut (10a, 10b, 10c, 10d) zur Zentrierung des jeweiligen Zentrierzapfens (20a, 20b, 20c, 20d) ausgebildet ist, während die jeweils andere Flanke der Zentriernut (10a, 10b, 10c, 10d) durch ein Spannelement (11a, 11b, 11c, 11d) gebildet wird, welches an einer Ausnehmung und/oder Erhebung des jeweiligen Zentrierzapfens (20a, 20b, 20c, 20d) anzugreifen bestimmt ist, um den Zentrierzapfen (20a, 20b, 20c, 20d) sowohl in Z-Richtung in die Zentriernut (10a, 10b, 10c, 10d) hineinzuziehen wie auch gegen die andere Nutflanke (14a, 14b, 14c, 14d) zu drücken.

2. Spanneinrichtung nach Anspruch 1, **dadurch gekennzeichnet, dass** der jeweilige Zentrierzapfen (20a) beidseitig mit je einer Ausnehmung (23a, 24a) und/oder Erhebung versehen ist, und dass die zur Zentrierung des jeweiligen Zentrierzapfens (20a) vorgesehene Nutflanke (14a) mit einer korrespondierenden Form versehen ist, um den Zentrierzapfen (20a) unter der Krafteinwirkung des Spannelements (11a) in Z-Richtung in die Zentriernut (10a) hineinzuziehen.

3. Spanneinrichtung nach Anspruch 1 oder 2, **dadurch gekennzeichnet, dass** das Spannfutter (1) mit vier um jeweils 90° um die Z-Achse (26) zueinander versetzen, Zentriernuten (10a, 10b, 10c, 10d) und die Palette mit vier korrespondierenden Zentrierzapfen (20a, 20b, 20c, 20d) versehen ist, wobei jeweils zwei einander diametral gegenüberliegenden Zentriernuten (10a, 10c) zur Festlegung der Lage der Palette (2) in X-Richtung ausgebildet sind, während die zwei anderen, einander diametral gegenüberliegenden Zentriernuten (10b, 10d) zur Festlegung der Lage der Palette (2) in Y-Richtung ausgebildet sind.

4. Spanneinrichtung nach einem der vorhergehenden Ansprüche, **dadurch gekennzeichnet, dass** das jeweilige Spannelement (11a) als schwenkbarer Riegel ausgebildet ist, welcher mittels eines in Z-Richtung verschiebbaren Spannkolbens (16) in Richtung der gegenüberliegenden Nutflanke (14a) verschwenkbar ist.

5. Spanneinrichtung nach Anspruch 4, **dadurch gekennzeichnet, dass** der Drehpunkt des Spannelements (11a) unterhalb der jeweiligen Zentriernut (10a) liegt.

6. Spanneinrichtung nach Anspruch 4 oder 5, **dadurch gekennzeichnet, dass** der Spannkolben (16) mit einem zylindrischen Fortsatz (18) zum Verschwenken des jeweiligen Riegels (11a) von einer Grund- in eine Wirkstellung versehen ist.

7. Spanneinrichtung nach Anspruch 6, **dadurch gekennzeichnet, dass** der Fortsatz (18) des Spannkolbens (16) mit einem konisch zulaufenden Vorderteil versehen ist.

8. Spanneinrichtung nach einem der Ansprüche 4 bis 7, **dadurch gekennzeichnet, dass** der Spannkolben (16) mittels einer Feder (19) in Richtung des Spannelements (11a) belastet ist.

9. Spanneinrichtung nach einem der vorhergehenden Ansprüche, **dadurch gekennzeichnet, dass** das Spannfutter (1) mit einer zentralen, durchgehenden Öffnung (6) versehen ist.

10. Spanneinrichtung nach einem der vorhergehenden Ansprüche, **dadurch gekennzeichnet, dass** das Spannfutter (1) zwischen zwei einander benachbarten Zentriernuten (10a, 10b; 10b, 10c; 10c, 10d; 10d, 10a) jeweils eine als Z-Referenz dienende Auflagefläche (15a, 15b, 15c, 15d) aufweist.

11. Spanneinrichtung nach Anspruch 10, **dadurch gekennzeichnet, dass** die als Z-Referenz dienenden Auflageflächen (15a, 15b, 15c, 15d) im wesentlichen kreisringsegmentförmig ausgebildet sind.

## Claims

1. Clamping assembly having a chuck (1) and a pallet (2) releasably mounted thereon, the chuck (1) being provided with at least three centring grooves (10a, 10b, 10c, 10d) and the pallet (2) being provided with at least three corresponding centring pins (20a, 20b, 20c, 20d), and the chuck (1) being provided with clamping means for clamping the pallet (2) in place, **characterized in that** in each case the one flank (14a, 14b, 14c, 14d) of the centring groove (10a, 10b, 10c, 10d) is designed for centring the respective centring pin (20a, 20b, 20c, 20d), whereas the respective other flank of the centring groove (10a, 10b, 10c, 10d) is formed by a clamping element (11a, 11b, 11c, 11d) which is intended for acting on a recess and/or prominence of the respective centring pin (20a, 20b, 20c, 20d) in order to both draw the centring pin (20a, 20b, 20c, 20d) in the Z direction into the centring groove (10a, 10b, 10c, 10d) and press it against the other groove flank (14a, 14b, 14c, 14d).

2. Clamping assembly according to Claim 1, **characterized in that** the respective centring pin (20a) is provided on each side with a respective recess (23a, 24a) and/or prominence, and **in that** the groove flank (14a) provided for centring the respective centring pin (20a) is provided with a corresponding shape in order to draw the centring pin (20a) in the Z direction into the centring groove (10a) under the action of force of the clamping element (11a).

3. Clamping assembly according to Claim 1 or 2, **characterized in that** the chuck (1) is provided with four centring grooves (10a, 10b, 10c, 10d) offset from one another about the Z axis (26) by 90° each, and the pallet is provided with four corresponding centring pins (20a, 20b, 20c, 20d), in each case two diametrically opposite centring grooves (10a, 10c) being designed for fixing the position of the pallet (2) in the X direction, whereas the other two diametrically opposite centring grooves (10b, 10d) are designed for fixing the position of the pallet (2) in the Y direction.

4. Clamping assembly according to one of the preceding claims, **characterized in that** the respective clamping element (11a) is designed as a pivotable latch which can be pivoted in the direction of the opposite groove flank (14a) by means of a clamping piston (16) displaceable in the Z direction.

5. Clamping assembly according to Claim 4, **characterized in that** the pivot of the clamping element (11a) lies below the respective centring groove (10a).

6. Clamping assembly according to Claim 4 or 5, **characterized in that** the clamping piston (16) is provided with a cylindrical extension (18) for pivoting the respective latch (11) from a basic position into an operative position.

7. Clamping assembly according to Claim 6, **characterized in that** the extension (18) of the clamping piston (16) is provided with a conically tapering front part.

8. Clamping assembly according to one of Claims 4 to 7, **characterized in that** the clamping piston (16) is loaded in the direction of the clamping element (11a) by means of a spring (19).

9. Clamping assembly according to one of the preceding claims, **characterized in that** the chuck (1) is provided with a central through-opening (6).

10. Clamping assembly according to one of the preceding claims, **characterized in that** the chuck (1) has a respective seating surface (15a, 15b, 15c, 15d), serving as Z reference, between two centring grooves (10a, 10b; 10b, 10c; 10c, 10d; 10d, 10a) adjacent to one another.

11. Clamping assembly according to Claim 10, **characterized in that** the seating surfaces (15a, 15b, 15c, 15d) serving as Z reference is designed essentially in the shape of an annular segment.

## Revendications

1. Dispositif de serrage avec un mandrin de serrage (1) et une palette (2) pouvant y être fixée de manière amovible, le mandrin de serrage (1) étant muni d'au moins trois rainures de centrage (10a, 10b, 10c, 10d) et la palette (2) d'au moins trois tourillons de centrage (20a, 20b, 20c, 20d) correspondants, et le mandrin de serrage (1) étant doté de moyens de serrage permettant de serrer à fond la palette (2), **caractérisé en ce que** respectivement un flanc (14a, 14b, 14c, 14d) de la rainure de centrage (10a, 10b, 10c, 10d) est réalisé pour le centrage du tourillon de centrage (20a, 20b, 20c, 20d) respectif, alors que respectivement l'autre flanc de la rainure de centrage (10a, 10b, 10c, 10d) est formé par un élément de serrage (11a, 11b, 11c, 11d), qui est destiné à saisir au niveau d'un évidement et/ou bossage du tourillon de centrage (20a, 20b, 20c, 20d) respectif pour faire entrer le tourillon de centrage (20a, 20b, 20c, 20d) dans la direction Z dans la rainure de centrage (10a, 10b, 10c, 10d) et également le pousser contre l'autre flanc de rainure (14a, 14b, 14c, 14d).

2. Dispositif de serrage selon la revendication 1, **caractérisé en ce que** le tourillon de centrage (20a) respectif est doté des deux côtés d'un évidement (23a, 24a) et/ou bossage et **en ce que** le flanc de rainure (14a) prévu pour le centrage du tourillon de centrage (20a) respectif est doté d'une forme correspondante pour faire entrer le tourillon de centrage (20a) sous l'effet dynamique de l'élément de serrage (11a) dans la direction Z dans la rainure de centrage (10a).

3. Dispositif de serrage selon la revendication 1 ou 2, **caractérisé en ce que** le mandrin de serrage (1) est doté de quatre rainures de centrage (10a, 10b, 10c, 10d) décalées l'une par rapport à l'autre de 90° autour de l'axe Z (26) et la palette est munie de quatre tourillons de centrage (20a, 20b, 20c, 20d) correspondants, respectivement deux rainures de centrage (10a, 10c) diamétralement opposées l'une à l'autre sont réalisées pour déterminer la position de la palette (2) dans la direction X, alors que les deux autres rainures de centrage (10b, 10d) diamétralement opposées l'une à l'autre sont réalisées pour déterminer la position de la palette (2) dans la direction Y.

4. Dispositif de serrage selon l'une quelconque des revendications précédentes, **caractérisé en ce que** l'élément de serrage respectif (11a) est réalisé sous forme de verrou pivotant, qui peut être pivoté dans la direction du flanc de rainure (14a) opposé à l'aide d'un piston de serrage (16) pouvant être déplacé dans la direction Z.

5. Dispositif de serrage selon la revendication 4, **caractérisé en ce que** le centre de rotation de l'élément de serrage (11a) se situe sous la rainure de centrage (10a) respective.

6. Dispositif de serrage selon la revendication 4 ou 5, **caractérisé en ce que** le piston de serrage (16) est doté d'un prolongement cylindrique (18) permettant de pivoter le verrou (11a) respectif d'une position de base à une position active.

7. Dispositif de serrage selon la revendication 6, **caractérisé en ce que** le prolongement (18) du piston de serrage (16) est doté d'une partie avant conique.

8. Dispositif de serrage selon l'une quelconque des revendications 4 à 7, **caractérisé en ce que** le piston de serrage (16) est chargé à l'aide d'un ressort (19) dans la direction de l'élément de serrage (11a).

9. Dispositif de serrage selon l'une quelconque des revendications précédentes, **caractérisé en ce que** le mandrin de serrage (1) est muni d'une ouverture (6) centrale continue.

10. Dispositif de serrage selon l'une quelconque des revendications précédentes, **caractérisé en ce que** le mandrin de serrage (1) présente entre deux rainures de centrage (10a, 10b ; 10b, 10c ; 10c, 10d ; 10d, 10a) adjacentes respectivement une surface d'appui (15a, 15b, 15c, 15d) servant de référence Z.

11. Dispositif de serrage selon la revendication 10, **caractérisé en ce que** les surfaces d'appui (15a, 15b, 15c, 15d) servant de référence Z sont réalisées essentiellement en forme de segment d'un anneau de cercle.
